Europäisches Patentamt

European Patent Office

Office européen des brevets

(19)

(11) Numéro de publication : **0 031 779**
**B1**

(12)

# FASCICULE DE BREVET EUROPÉEN

(45) Date de publication du fascicule du brevet :
26.09.84

(21) Numéro de dépôt : 80401867.9

(22) Date de dépôt : 24.12.80

(51) Int. Cl.³ : **F 16 L 59/14, F 16 L 59/12**

(54) Canalisation pour le transport de fluides chauds ou froids.

(30) Priorité : 27.12.79 FR 7931780

(43) Date de publication de la demande :
08.07.81 Bulletin 81/27

(45) Mention de la délivrance du brevet :
26.09.84 Bulletin 84/39

(84) Etats contractants désignés :
AT BE CH DE GB IT LI LU NL SE

(56) Documents cités :
DE-B- 1 030 801
FR-A- 2 425 606
US-A- 2 405 330
US-A- 2 423 213
US-A- 3 709 772

(73) Titulaire : **SPIE-BATIGNOLLES**
**Tour Anjou 33, Quai de Dion-Bouton**
**F-92806 Puteaux (FR)**

(72) Inventeur : **Chabrier, Gilbert**
**7, rue Bastienne**
**F-95160 Montmorency (FR)**

(74) Mandataire : **Bouju, André**
**38 Avenue de la Grande Armée**
**F-75017 Paris (FR)**

## Description

La présente invention concerne une canalisation pour le transport de fluides chauds ou froids tels que l'eau chaude de chauffage, le pétrole brut chauffé ou les gaz refroidis ou liquéfiés à basse température.

On sait que le transport des fluides chauds ou froids pose de gros problèmes dans la construction des canalisations destinées au transport de tels fluides. Ces canalisations nécessitent en premier lieu un calorifugeage efficace pour éviter les déperditions vers l'extérieur de la chaleur ou du froid emmagasiné par le fluide.

Par ailleurs, lors de la mise en service de ces canalisations, ces dernières subissent des contraintes dues à la dilatation ou à la contraction résultant de l'écart avec la température de pose.

Pour résoudre ces problèmes, on emploie habituellement des canalisations en acier calorifugées extérieurement et comportant des compensateurs de dilatation tels que des soufflets ou des lyres. La réalisation de ces canalisations est complexe et coûteuse. De plus, ces canalisations se prêtent mal au transport à longue distance des fluides chauds ou froids et à l'enfouissement en tranchées. Par ailleurs, ces canalisations exigent une enveloppe résistante et étanche de protection du revêtement extérieur calorifuge. Cette enveloppe résistante et étanche est coûteuse et ne permet pas la protection cathodique des canalisations en acier.

Pour remédier à ces inconvénients, on a proposé des canalisations réalisées en tubes en alliage invar qui présente un coefficient de dilatation faible, de sorte qu'on évite l'emploi de compensateurs de dilatation ou de contraction. Toutefois, l'emploi de l'alliage invar est limité aux températures inférieures à 200 °C environ, en raison de l'augmentation notable de son coefficient de dilatation thermique à partir de cette température.

De plus, le coût de l'alliage invar a empêché jusqu'à présent son utilisation industrielle dans les canalisations de très fortes sections prévues pour le transport de fluides chauds ou froids sur de longues distances.

La canalisation pour le transport de fluides chauds ou froids selon l'invention consiste en une enveloppe extérieure métallique comprenant des tubes rigides directement assemblés bout à bout, par exemple par soudage, et renfermant un revêtement calorifuge directement en contact avec le fluide transporté.

La canalisation décrite dans la demande de brevet européen 497 (Jülich) répond à cette définition mais présente entre autres l'inconvénient de n'assurer que modérément l'étanchéité entre l'enveloppe extérieure et le fluide.

D'autres canalisations, comme par exemple celle connue selon la demande de brevet français 2 170 328 (CEA) se rapportant à une canalisation emmurée dans un caisson en béton, présentent au contraire un espace libre servant à l'isolation entre l'enveloppe métallique et le matériau calorifuge.

D'autres encore, telles que les canalisations présentées dans US-A-1 714 984 (Coffin) permettent d'assurer la circulation d'un fluide de refroidissement entre l'enveloppe métallique extérieure et le revêtement isolant.

Le FR-A-2 425 606 décrit une canalisation destinée à transporter un gaz chaud comportant en son intérieur un revêtement en matériau calorifuge constitué par des briques isolantes profilées formant des viroles individuelles. Entre le fluide transporté par la canalisation et le revêtement calorifuge proprement dit est disposé un tube de guidage de gaz qui évite tout contact direct entre ce dernier et le matériau calorifuge. Le diamètre extérieur du revêtement calorifuge est légèrement inférieur au diamètre intérieur du tube extérieur, pour faciliter le montage. Les problèmes posés par la dilatation et la contraction de la canalisation sous l'effet des variations brusques de température et le raccordement des tubes, ne sont pas évoqués dans ce document.

On connaît par ailleurs, selon le US-A-3 709 772 un article composite en métal, tel qu'un échappement d'automobile comprenant une couche interne de céramique séparée de l'enveloppe métallique extérieure par une couche en matière élastique qui protège la couche céramique contre les chocs mécaniques. Cependant, l'enseignement de ce document ne peut être transposé aux canalisations considérées par la présente invention.

Le US-A-2 423 213 décrit une canalisation pour fluides très chauds comprenant deux enveloppes métalliques concentriques, séparées par une couche en matière isolante. Le fluide est ainsi en contact avec l'enveloppe intérieure qui protège la couche en matière isolante. Les éléments de canalisation sont raccordés bout à bout au moyen de joints de compression. Ce type de canalisation est particulièrement complexe et onéreux à fabriquer.

Le problème qui est à la base de la présente invention est de trouver une solution économique et fiable pour calorifuger intérieurement une canalisation d'une manière telle que les tubes métalliques extérieurs puissent être soudés bout à bout et sans aucun compensateur du genre soufflet, lyre ou analogue, ni aucun moyen d'ancrage de la canalisation.

Suivant l'invention, la canalisation pour le transport de fluides chauds ou froids comprenant des tubes métalliques et rigides, directement assemblés bout à bout, un revêtement en matériau calorifuge disposé à l'intérieur desdits tubes et constitué par des viroles dont le diamètre extérieur est légèrement

**0 031 779**

inférieur au diamètre intérieur des tubes, et réalisées à partir d'un ciment chargé de particules inorganiques thermiquement isolantes, est caractérisée en ce que le revêtement est en contact direct avec le fluide transporté par la canalisation, et en ce que l'épaisseur dudit revêtement est déterminée de façon à limiter la dilatation ou la contraction des tubes engendrée lors de l'introduction du fluide chaud ou froid dans la canalisation à une valeur compatible avec la résistance mécanique des tubes directement assemblés bout à bout, et en ce que l'espace annulaire compris entre les tubes et les viroles est rempli par un matériau de scellement injecté sous pression et plus élastique que le matériau des viroles.

Ainsi, selon l'invention, on part d'un matériau connu en soi, à base de ciment chargé de particules isolantes, moulé en forme de viroles. Un tel matériau résiste à la pression et peut être mis en contact direct avec le fluide transporté par la canalisation, car ce matériau est étanche.

La solution énoncée ci-dessus comprend deux parties. La première partie expose les moyens (l'épaisseur du matériau isolant) qui sont nécessaires pour limiter à une valeur admissible les contraintes longitudinales dans les tubes extérieurs. Ces moyens ne suffisent cependant pas pour résoudre complètement le problème posé par l'invention. En effet, il se pose un délicat problème de mise en place des viroles en matériau isolant à l'intérieur des tubes, de fixation de ces dernières dans les tubes et de résistance mécanique des viroles à l'égard des contraintes mécaniques et thermiques qu'elles sont destinées à subir. Cette difficulté est surmontée par la seconde caractéristique de la solution énoncée ci-dessus.

Le matériau de scellement en question facilite considérablement la mise en place et la fixation des viroles dans les tubes. Ce matériau joue cependant surtout le rôle important suivant : d'une part, il rend les viroles isolantes solidaires des tubes métalliques en absorbant le retrait de ces viroles et permet d'autre part un effet de frettage des viroles dont les contraintes internes dues à la dilatation et à la pression sont transmises aux tubes extérieurs.

Selon une version préférée de l'invention, le revêtement est constitué par des viroles préfabriquées séparées les unes des autres par des joints d'étanchéité élastiques, résistants à la température du fluide.

Ces joints de dilatation encaissent les contraintes dues à la dilatation longitudinale des viroles.

D'autres particularités et avantages de l'invention apparaîtront encore dans la description ci-après.

Aux dessins annexés, donnés à titre d'exemples, non limitatifs :

La figure 1 est une vue en coupe longitudinale d'une canalisation conforme à l'invention ;

La figure 2 est une vue en coupe suivant le plan II-II de la figure 1 ;

La figure 3 est une vue à grande échelle, du détail A de la figure 1 ;

La figure 4 est une vue en coupe longitudinale d'une variante de canalisation conforme à l'invention ;

La figure 5 est une vue en coupe suivant le plan V-V de la figure 4 ;

La figure 6 est une vue en coupe longitudinale d'une canalisation conforme à l'invention, en fonte ductile.

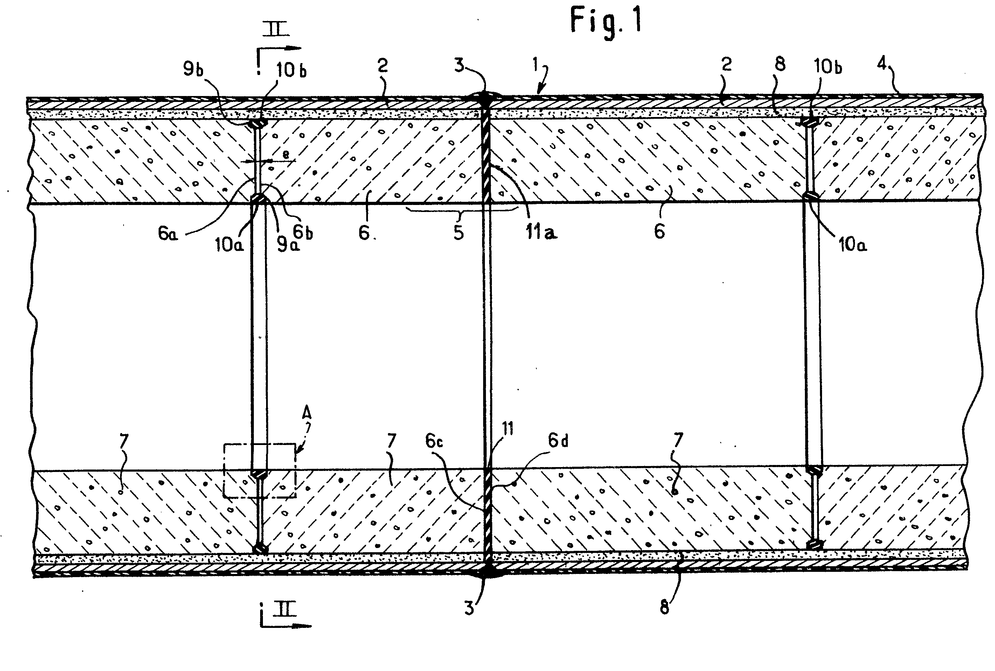

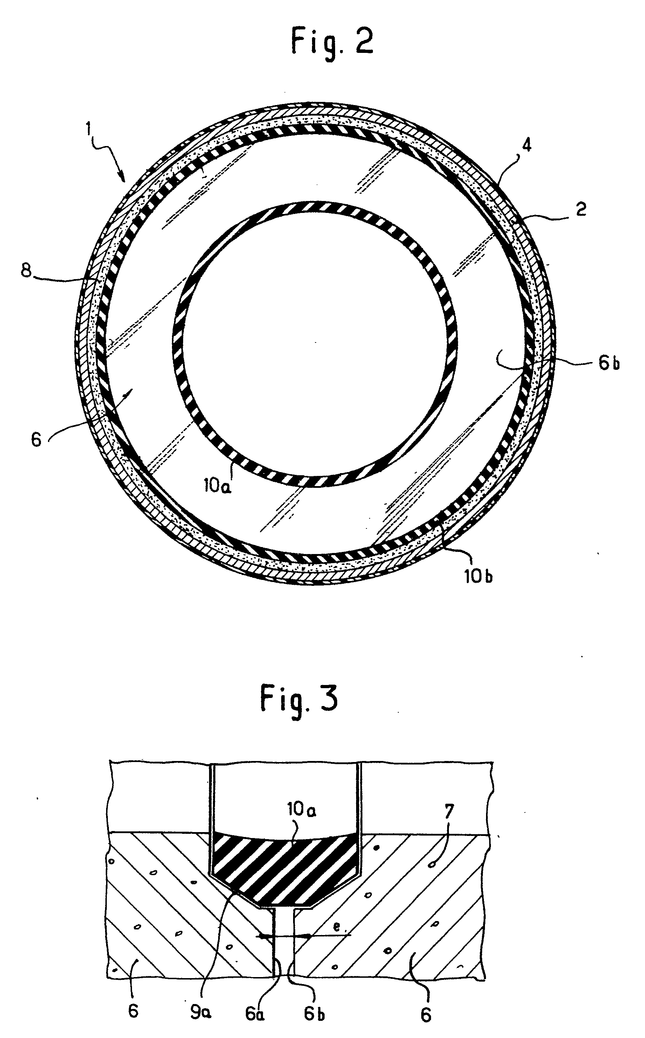

Dans la réalisation des figures 1 et 2, la canalisation est par exemple destinée à être enterrée pour transporter sur une distance de l'ordre de 30 à 40 kilomètres, de l'eau chaude de chauffage portée à 110-120 °C, sous une pression de 25 bars environ et à un débit correspondant à 150 000 Th/h.

La canalisation 1 est composée de tubes 2 en acier ordinaire, directement assemblés bout à bout sur chantier par des soudures 3. Ces tubes 2 sont protégés extérieurement par une couche 4 de revêtement anticorrosion classique.

Les tubes en acier 2 comportent à leur intérieur, un revêtement calorifuge 5 constitué par des viroles préfabriquées 6 en matériau calorifuge. Ces tubes 2 constituent une enveloppe de frettage pour le revêtement calorifuge 5. Cette matière calorifuge est constituée par exemple par un ciment alumineux réfractaire enrobant des billes de verre expansé 7. Ces billes de verre expansé 7 peuvent éventuellement être mélangées avec des grains de perlite, des sphères creuses de silice ou autres matériaux thermiquement isolants résistant à la chaleur.

Ces billes de verre expansé 7 ou les particules thermiquement isolantes précitées confèrent au revêtement 5 un pouvoir calorifuge relativement élevé pour un matériau à base de ciment.

Ainsi, lorsque le revêtement calorifuge 5 renferme 30 % en poids environ de billes de verre expansé 7, son coefficient de transmission thermique $\lambda$ est égal à 0,3 kcal/m/h/°C, alors que ce coefficient est supérieur à 1,3 dans le cas d'un ciment alumineux non chargé de billes de verre expansé.

Le liant en ciment alumineux du revêtement calorifuge 5 confère à ce dernier une haute résistance aux efforts de pression appliqués par le fluide ainsi qu'une excellente résistance à l'abrasion causée par le passage de ce fluide.

L'épaisseur du revêtement calorifuge 5 est déterminée de façon que la température des tubes en acier ordinaire 2 ne dépasse pas 60 °C quelle que soit la nature des terrains traversés par la canalisation 1.

De ce fait, lors de la mise en service de la canalisation 1, c'est-à-dire lors de l'introduction de l'eau chaude dans cette dernière, la dilatation des tubes 2 sous l'effet de leur augmentation de température à partir de la température ambiante, reste négligeable et les contraintes mécaniques en résultant restent inférieures aux contraintes admissibles compte tenu de la résistance mécanique des tubes 2.

Ainsi la canalisation 1 peut être enterrée sans précaution spéciale et en particulier sans utiliser aucun moyen d'ancrage, aucune butée ni aucun compensateur du genre soufflet, lyre ou analogue.

3

Sur les figures 1 et 2, on voit que le diamètre extérieur des viroles 6 est légèrement inférieur au diamètre intérieur des tubes en acier 2. L'espace annulaire compris entre ces tubes 2 et les viroles 6 est comblé par une matière de scellement élastique 8. Cette matière de scellement 8 est plus élastique que le revêtement calorifuge 5. Ce matériau de scellement 8 peut être réalisé par exemple en une matière plastique relativement souple comme le polychlorure de vinyle ou encore en un ciment à base de latex.

Le matériau de scellement 8 joue un rôle important : d'une part, il rend les viroles 6 solidaires des tubes en acier 2 en absorbant le retrait de ces dernières, et permet d'autre part un effet de frettage du calorifuge dont les contraintes internes dues à la dilatation et à la pression sont transmises aux tubes d'acier 2. Dans le cas de fluides froids une précontrainte du calorifuge peut être apportée par ce matériau de scellement 8 lors de l'injection (faite alors à haute pression) de façon à compenser la contraction de l'isolant sous l'effet du froid et supprimer ainsi les tensions internes.

Du fait de son élasticité plus importante que celle des viroles 6, le matériau 8 absorbe également les différentielles de dilatation entre les viroles 6 et les tubes 2, ainsi que les choses mécaniques susceptibles d'être appliqués à l'extérieur des tubes 2.

On voit par ailleurs sur la figure 1, qu'un jeu e est ménagé entre les extrémités adjacentes 6a, 6b des viroles 6 de façon à permettre la dilatation longitudinale de ces viroles 6. De plus, les extrémités adjacentes 6a, 6b des viroles 6 comportent sur leurs bords intérieur et extérieur (voir fig. 3) des épaulements 9a et 9b définissant des logements annulaires dans lesquels sont encastrés des joints 10a et 10b d'étanchéité et de dilatation. Ces joints 10a et 10b sont réalisés en une matière élastique résistant chimiquement au fluide et à la température de ce dernier, telle que par exemple un élastomère à base de silicone ou un élastomère mélangé avec des fibres d'amiante.

Au niveau des soudures 3 réunissant les tubes en acier 2, un joint plat 11 est disposé entre les extrémités coupées 6c, 6d des viroles 6. Ce joint plat 11 est de préférence en élastomère chargé d'amiante.

Pour construire la canalisation 1 qui vient d'être décrite, on procède de la façon suivante :

Après avoir préfabriqué les viroles 6, on les engage dans un tube en acier 2, en interposant des joints 10a et 10b entre chaque virole 6 et en laissant un léger dépassement à chaque extrémité du tube 2.

L'engagement des viroles 6 dans le tube 2 ne présente aucune difficulté du fait du jeu annulaire existant entre les viroles 6 et le tube 2 et qui tient compte des tolérances de fabrication de ces tubes 2 et des viroles 6.

Après centrage de l'ensemble des viroles 6 dans le tube 2, et obturation de l'espace annulaire aux extrémités, on injecte le matériau de scellement élastique 8.

Après pose du matériau de scellement 8, les extrémités sont ajustées à la longueur du tube 2.

Les tubes 2 ainsi préparés sont ensuite envoyés sur le chantier de pose où ils sont soudés bout à bout avec interposition entre les faces 6c et 6d des viroles 6 d'un joint plat 11 dont l'épaisseur est égale à celle du jour nécessaire à la soudure. Le retrait au soudage vient ensuite comprimer le joint. Dans certains cas, où une étanchéité meilleure est nécessaire, un élastomère vulcanisant à froid est placé en 11a avant la mise bout à bout des tubes 2.

L'installation d'une canalisation conforme à l'invention est très aisée et n'exige aucune précaution spéciale étant donné qu'en service, les tubes 2, grâce à l'isolation thermique apportée par le revêtement intérieur calorifuge 5, sont soumis à des contraintes parfaitement compatibles avec la résistance propre de ces tubes.

On donne ci-après, à titre d'exemple non limitatif, les caractéristiques numériques d'une canalisation conforme à la figure 1 destinée à transporter 150 000 Th/h avec de l'eau à 120 °C et à être enfouie dans un sol présentant une température moyenne de 10 °C.

Tubes 2 : diamètre extérieur 812,8 mm, épaisseur 6 mm.

Couche élastique 8 : polychlorure de vinyle, épaisseur 10 mm.

Revêtement calorifuge 5 : ciment alumineux chargé de billes de verre expansé (Expanver), épaisseur 11,5 cm.

Coefficient d'isolation thermique du sol : 1,5 kcal/m/h/°C.

Profondeur d'enterrement de la canalisation 1 : 1,206 m.

La composition détaillée du béton utilisé dans cet exemple pour réaliser le revêtement calorifuge 5 est la suivante :

Billes de verre expansé de 6 à 8 mm de $\varnothing$ : 100 kg ;

Billes de verre expansé de 1 à 2 mm de $\varnothing$ : 111 kg ;

Sphères de silice creuses de 20 à 200 microns de diamètre : 133 kg.

Ciment alumineux fondu : 333 kg.

Eau : 180 litres.

Dans cet exemple, la température des tubes en acier 2 est maintenue en service à 61 °C. Les pertes thermiques sont ainsi réduites à 272 Th/h/km.

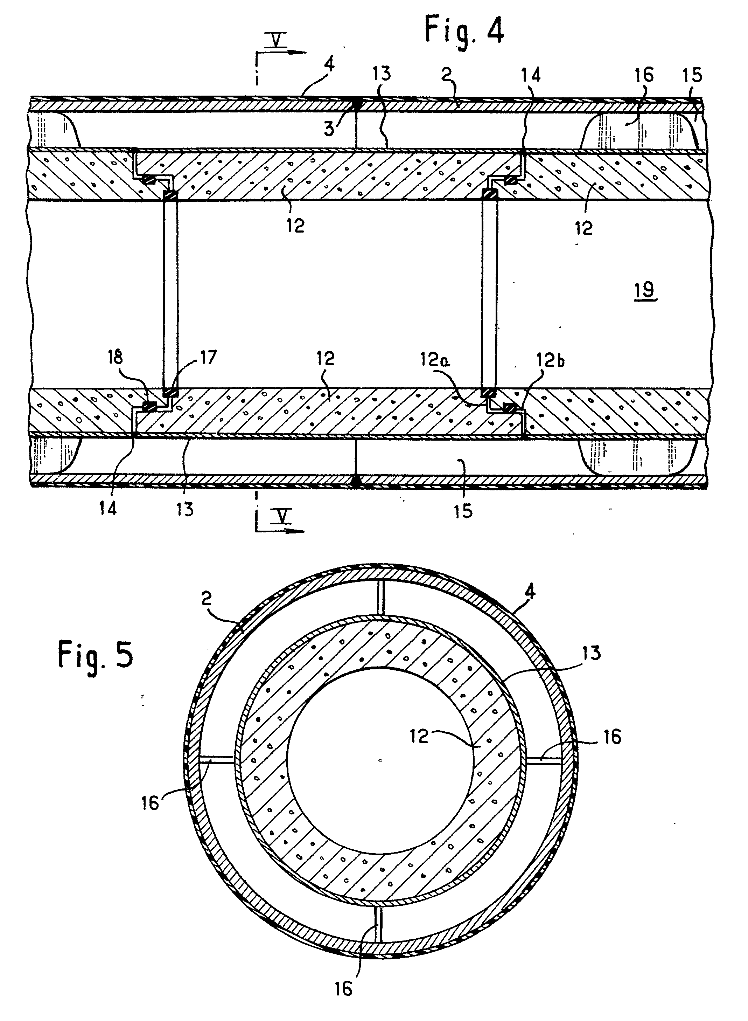

Dans la réalisation selon les figures 4 et 5, le revêtement calorifuge 12 est disposé à l'intérieur de manchons 13 en acier ordinaire assemblés bout à bout par des soudures 14. Les manchons 13 sont séparés des tubes extérieurs 2 en acier par un espace annulaire 15.

Le centrage des manchons 13 portant le revêtement calorifuge intérieur 12 est réalisé au moyen d'ailettes 16 fixées radialement sur la périphérie des manchons en acier 13.

Dans la réalisation représentée, les extrémités adjacentes 12a, 12b des viroles composant le revêtement intérieur calorifuge 12 sont emboîtées les unes dans les autres, l'étanchéité étant réalisée au moyen de joints annulaires 18, 17 en élastomère.

La canalisation représentée sur les figures 4 et 5 comporte donc deux compartiments concentriques 19 et 15. Le comportement intérieur 19 est destiné au transport d'un fluide froid ou chaud, par exemple de l'eau chaude comme dans le cas de la réalisation représentée sur les figures 1 et 2.

Le revêtement intérieur calorifuge 12 assure comme précédemment l'isolation thermique par rapport à l'extérieur et le maintien des manchons 13 en acier ainsi que des tubes extérieurs 2 à une température inférieure au seuil d'apparition des contraintes critiques dans ces derniers.

L'espace annulaire ou compartiment extérieur 15 permet le transport d'un fluide à une température inférieure à celle du fluide contenu dans le compartiment intérieur 19.

Dans une application préférée de l'invention, le compartiment extérieur 15 permet d'assurer le retour de l'eau froide après que l'eau chaude transportée dans le compartiment intérieur 19 ait échangé sa chaleur dans une installation de chauffage quelconque.

Bien entendu, l'invention n'est pas limitée aux exemples de réalisation que l'on vient de décrire et on peut apporter à ceux-ci de nombreuses modifications sans sortir du cadre de l'invention.

Ainsi la canalisation conforme à l'invention peut s'appliquer aux transports de tous les fluides chauds jusqu'à une température dépassant 400 °C.

La canalisation conforme à l'invention peut également s'appliquer aux transports de fluides froids, tels que du gaz naturel refroidi à − 70 °C.

Dans ces applications, ainsi que das les cas où la température du fluide ne dépasse pas + 200 °C, le liant du revêtement calorifuge interne est de préférence en une résine appropriée telle que chlorure de polyvinyle, résine époxy ou élastomère.

On donne ci-après un exemple non limitatif de revêtement calorifuge utilisant un liant à base de résine époxy.

| | | |
|---|---:|---|
| — Sphères creuses de silice type « Régisphère » : | 200 | kg |
| — Perlite de 1 mm de diamètre : | 75 | kg |
| — Résine époxy (Araldite E) : | 183 | kg |
| — Durcisseur HY842 : | 91,5 | kg |

Le revêtement ainsi obtenu présente une résistance à la compression de 78 bars et un coefficient de transmission calorifique λ de 0,15 kcal/m/h/°C.

Les tubes extérieurs 2 de la canalisation conforme à l'invention n'étant pas en contact avec le fluide transporté peuvent être réalisés en acier ordinaire. Ceci constitue une économie considérable dans les cas de très basses ou très hautes températures, nécessitant habituellement des aciers alliés spéciaux.

Dans le cas de lignes sous-marines à grande profondeur, la pose d'un calorifuge résistant aux compressions à l'intérieur des tubes en acier 2 permet une économie substantielle sur l'épaisseur de ces tubes étant donné qu'une partie importante de la pression est encaissée par le revêtement calorifuge de sorte que ce dernier constitue en même temps un élément d'allègement permanent de la canalisation.

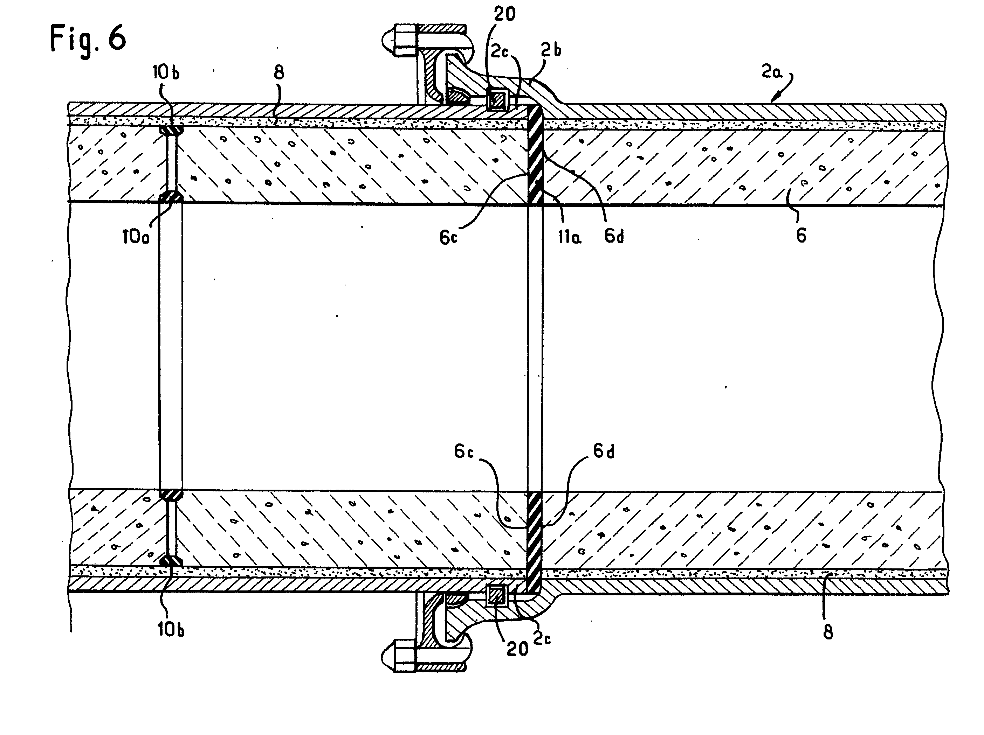

Dans la réalisation selon la figure 6, on a représenté une canalisation conforme à l'invention, dans laquelle les tubes extérieurs 2a sont réalisés en fonte ductile. Les extrémités 2b et 2c de ces tubes 2a sont emboîtées les unes dans les autres et verrouillées ensemble au moyen de l'organe de verrouillage 20. Le joint plat 11a est compris entre les extrémités 2b et 2c.

## Revendications

1. Canalisation pour le transport de fluides chauds ou froids, comprenant des tubes (2) métalliques et rigides, directement assemblés bout à bout, un revêtement (5) en matériau calorifuge disposé à l'intérieur desdits tubes (2) et constitué par des viroles (6) dont le diamètre extérieur est légèrement inférieur au diamètre intérieur des tubes (2) et réalisées à partir d'un ciment chargé de particules inorganiques thermiquement isolantes, caractérisé en ce que le revêtement (5) est en contact direct avec le fluide transporté par la canalisation et en ce que l'épaisseur dudit revêtement est déterminée de façon à limiter la dilatation ou la contraction des tubes (2) engendrée lors de l'introduction du fluide chaud ou froid dans la canalisation à une valeur compatible avec la résistance mécanique des tubes directement assemblés bout à bout, et en ce que l'espace annulaire compris entre les tubes (2) et les viroles (6) est rempli par un matériau de scellement (8) injecté sous pression et plus élastique que le matériau des viroles.

2. Canalisation conforme à la revendication 1, caractérisée en ce que le matériau (8) de scellement élastique est un ciment à base de latex.

3. Canalisation conforme à la revendication 1, caractérisée en ce que le revêtement est constitué par des viroles préfabriquées (6) séparées les unes des autres par des joints d'étanchéité élastiques (10a, 10b) résistant à la température du fluide.

**Claims**

1. Pipe for conveying hot or cold fluids, comprising rigid metallic tubes (2) which are directly assembled in end-to-end relation, a lining (5) of heat-insulating material placed within the interior of said tubes (2) and constituted by cylindrical segments (6) having an external diameter which is slightly smaller than the internal diameter of the tubes (2) and fabricated from a cement loaded with heat-insulating inorganic particles, characterized in that the lining (5) is in direct contact with the fluid conveyed by the pipe and that the thickness of said lining is so determined as to limit the expansion or contraction of the tubes (2) produced at the time of introduction of the hot or cold fluid into the pipe to a value compatible with the mechanical strength of the tubes directly assembled in end-to-end relation, and that the annular space located between the tubes (2) and the cylindrical segments (6) is filled with sealing material (8) which is injected under pressure and has a higher degree of elasticity than the material of the cylindrical segments.

2. Pipe in accordance with claim 1, characterized in that the elastic sealing material (8) is a cement having a latex base.

3. Pipe in accordance with claim 1, characterized in that the lining is constituted by prefabricated cylindrical segments (6) separated from each other by elastic seals (10a, 10b) which are resistant to the temperature of the fluid.

**Ansprüche**

1. Kanalisation zum Befördern von heißen oder kalten fluiden Medien, mit starren Metallrohren (2), die direkt Ende an Ende zusammengebaut sind, und einer Auskleidung (5) aus einem wärmedämmenden Material, die im Inneren der Rohre (2) angeordnet und durch Hülsen (6) gebildet ist, deren Außendurchmesser etwas kleiner als der Innendurchmesser der Rohre (2) ist und die aus einem mit anorganischen, wärmeisolierenden Teilchen angereicherten Zement gefertigt sind, dadurch gekennzeichnet, daß die Auskleidung (5) in direkter Berührung mit dem durch die Kanalisation beförderten fluiden Medium steht und daß die Dicke der Auskleidung derart bestimmt ist, daß die Dehnung oder Kontraktion der Rohre (2), die bei der Einleitung des heißen oder kalten fluiden Mediums in die Kanalisation erzeugt wird, auf einen Wert begrenzt wird, der mit der mechanischen Festigkeit der direkt Ende an Ende zusammengebauten Rohre verträglich ist, sowie daß der Ringraum, welcher zwischen den Rohren (2) und den Hülsen (6) enthalten ist, durch ein Versiegelungsmaterial (8) ausgefüllt ist, welches unter Druck eingespritzt ist und eine höhere Elastizität als der Werkstoff aufweist, aus dem die Hülsen gebildet sind.

2. Kanalisation nach Anspruch 1, dadurch gekennzeichnet, daß das elastische Versiegelungsmaterial (8) ein Zement auf Latexbasis ist.

3. Kanalisation nach Anspruch 1, dadurch gekennzeichnet, daß die Auskleidung durch vorgefertigte Hülsen (6) gebildet ist, die voneinander durch elastische Dichtfugen (10a, 10b) getrennt sind, welche gegen die Temperatur des fluiden Mediums beständig sind.

Fig.1

0031 779

# Fig. 2

# Fig. 3

## Fig. 4

## Fig. 5

# Fig. 6